# EUROPEAN PATENT SPECIFICATION

(11) **EP 2 724 925 B1**
(45) Date of publication and mention of the grant of the patent: **11.01.2017**
(21) Application number: 13189278.8
(22) Date of filing: 18.10.2013
(51) Int. Cl.: B62M 6/45, B62M 6/50

(54) **Gear shifting system for lowering motor rotational speed during gear shifting of pedal-assisted bicycle**
Gangschaltsystem zur Senkung der Drehzahl eines Motors während eines Gangwechsels eines pedalunterstützten Fahrrads
Système de changement de vitesse pour abaisser la vitesse de rotation du moteur au cours d'un changement de vitesse de bicyclette assistée par pédale

(30) Priority: 25.10.2012 TW 101139537
(43) Date of publication of application: 30.04.2014
(73) Proprietor: J.D Components Co., Ltd., Shou Shui Hsiang, Chang Hua Hsien (TW)
(72) Inventor: Cheng, Chi-Chang, 220 New Taipei City (TW); Chuo, Chiang-Che, 406 Taichung City (TW); Chen, Ching-Tung, Chang Hua Hsien (TW)
(74) Representative: Becker Kurig Straus

(56) References cited:
- DE-A1-102010 017 412
- JP-A- H11 147 494
- JP-A- 2001 010 581
- US-A1- 2003 141 126
- US-A1- 2004 206 188

## Description

### BACKGROUND OF THE INVENTION

### 1. Technical Field

The present invention is related to a pedal-assisted bicycle, in particular, to a gear shifting system for lowering a motor rotational speed during gear shifting of a pedal-assisted bicycle.

### 2. Description of Related Art

Known pedal-assisted bicycles are provided with assisting force from the motor controlled by the micro-computer during the pedaling of the rider, and the assisting force is not provided when there is no pedaling, which allows the rider to have easier pedaling and, at the same time, maintains the joy of the riding and pedaling of the bicycle. When riding a pedal-assisted bicycle, its micro-computer is able to determine whether to control the motor to alter the outputted assisting force based on the terrain, speed or gear position; in other words, the assisting force provided by the motor can be altered due to the control of the micro-computer during the riding of the bicycle.

Known pedal-assisted bicycles typically includes an automatic gear shifting function or a manual gear shifting function; the automatic gear shifting function typically uses a micro-computer to determine the timing for gear shifting and for controlling the corresponding derailleur to shift the gear; in addition, its micro-computer can also receive the gear shifting command from the rider as the rider presses on the gear shifting button in order to perform the gear shifting; the manual gear shifting function is carried out by the user operating a mechanical gear shifter to perform the gear shifting.

However, for traditional pedal-assisted bicycles, since the rider is still in the condition of pedaling during the gear shifting, the micro-computer would then determine that it is under a normal condition due to the action of pedaling and to control the motor to output enough assisting force. Such enough assisting force in conjunction with the force of the pedaling of the rider would then cause the problem of unmatched teeth without smooth engagement during the changing of gear ratio of the derailleur, or, even worse, cause the chain to break or damages on the derailleur.

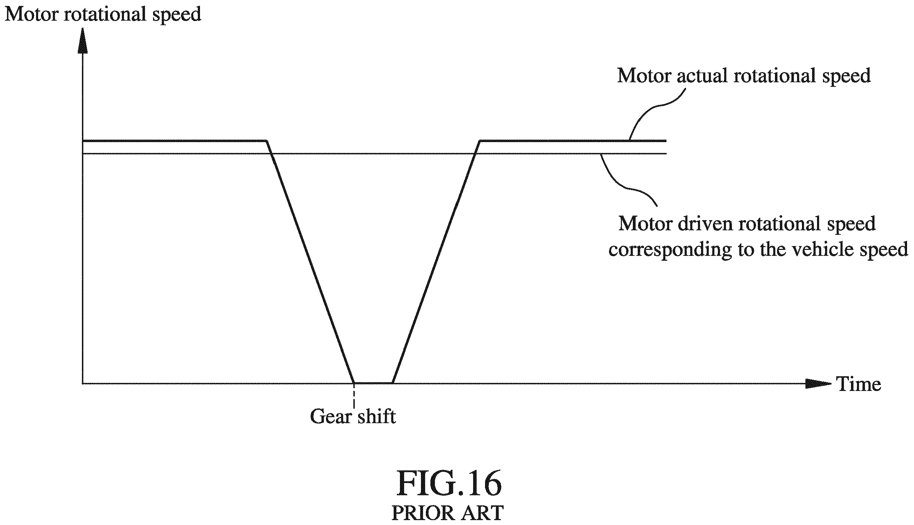

As shown in FIG. 16, in recent years, there has been a new technology of using a micro-computer to temporarily shut down the motor in order to stop it from providing assisting force during the process of automatic gear shifting, which is able to prevent the aforementioned problems of unmatched teeth without smooth engagement, broken chain or damaged derailleur from occurring. However, during the shutting down of the motor in the gear shifting process, there needs to be a certain period of time for the motor to be stopped from the original rotational speed; as for the time after the gear is shifted, it must then return to the original rotational speed from the stop, which too requires a certain period of time. The time required during such operations of changing from rotation to stop and from stop to rotation is indeed too lengthy for the process of gear shifting, which, in fact, can also cause the rider to feel delays in the return of the assisting force and is an issue to be overcome by the present invention.

The closest prior art US 2004/206188 discloses a gear shifting system in accordance with the preamble of claim 1.

### BRIEF SUMMARY OF THE INVENTION

A primary objective of the present invention is to provide a gear shifting system for lowering a motor rotational speed during gear shifting of a pedal-assisted bicycle to prevent the problems of unmatched teeth without smooth engagement, broken chain or damaged derailleur of the prior art during its gear shifting due to the pertained high assisting forces.

A secondary objective of the present invention is to provide a gear shifting system for lowering a motor rotational speed during gear shifting of a pedal-assisted bicycle to shorten the time for the return of the assisting force after the gear shifting such that the rider would not feel delays.

To achieve the aforementioned objective, the present invention provides a gear shifting system for lowering a motor rotational speed during gear shifting of a pedal-assisted bicycle, arranged on a pedal-assisted bicycle having a mid-mounted motor and a gear shifter, the gear shifting system comprising: a power module; a micro-computer electrically connected to the power module and the mid-mounted motor and used for controlling an outputted assisting force and a rotational speed of the mid-mounted motor; and a vehicle speed sensor module electrically connected to the micro-computer and used for detecting a vehicle speed of the pedal-assisted bicycle; the micro-computer having a motor rotational speed control logic and a vehicle speed/motor rotational speed correspondence table; during gear shifting, the micro-computer executing the motor rotational speed control logic, the vehicle speed/motor rotational speed correspondence table referring to motor driven rotational speeds for driving the pedal-assisted bicycle at various different vehicle speeds respectively; a process of the micro-computer executing the motor rotational speed control logic including: (S1) finding a motor driven rotational speed corresponding to a current vehicle speed based on the vehicle speed/motor rotational speed correspondence table; (S2) controlling the mid-mounted motor to be of a rotational speed lower than the motor driven rotational speed corresponding to the current vehicle speed but still maintaining a rotation of the mid-mounted motor such that a driving force of the mid-mounted motor is not transmitted to the pedal-assisted bicycle in a way similar to an idle rotation, during which the mid-mounted motor provides no driving force; (S3) after gear shifting completed, controlling the mid-mounted motor to return back to a motor driven rotational speed prior to gear shifting.

Preferably, in the process (S2) of the motor rotational speed control logic, the mid-mounted motor is controlled in order to have a rotational speed being 90%∼10% of the motor driven rotational speed corresponding to the current vehicle speed.

Preferably, in the process (S2) of the motor rotational speed control logic, the rotational speed of the mid-mounted motor is controlled to be 90% of the motor driven rotational speed corresponding to the current vehicle speed.

Preferably, it further comprises a gear shift driver electrically connected to the micro-computer and physically connected to the gear shifter as well as being controlled by the micro-computer to drive the gear shifter to perform gear shifting; during the gear shifting, the micro-computer executes the motor rotational speed control logic and cooperatively controls the gear shift driver to perform the gear shifting; after the process (S2) of the motor rotational speed control logic, a process (S2.1) is further included for controlling the gear shift driver to perform gear shifting.

Preferably, a timing for gear shifting is self-determined by the micro-computer to perform gear shifting or to receive a gear shifting command from a rider.

Preferably, the process (S2.1) of the motor rotational speed control logic is performed after the process (S2) has been completed for a first predefined period of time; as for the process (S3), it is performed after the process (S2.1) has been completed for a second predefined period of time.

Preferably, the first predefined period of time is 0.1 second ∼ 0.5 second; the second predefined period of time is 0.1 second ∼ 0.5 second.

Preferably, it further comprises a gear shift action detector arranged at the gear shifter and electrically connected to the micro-computer, used for detecting a gear shift action.

Preferably, the process (S3) of the motor rotational speed control logic is performed after the process (S2) has been completed for a third predefined period of time.

Preferably, the third predefined period of time is 0.1 second ~ 0.5 second.

Preferably, it further comprises a pedal position sensor module arranged on the pedal-assisted bicycle to correspond to at least one crank of the pedal-assisted bicycle and electrically connected to the micro-computer; the micro-computer uses the pedal position sensor module to obtain an angular position of the at least one crank; as the micro-computer executes the motor rotational speed control logic, in the process (S1), when the angular position of the at least one crank passes by a first angular position, lowering an outputted assisting force of the mid-mounted motor to a first assisting force value; and in the process (S2), after the angular position of the at least one crank leaves the first angular position to pass by a pedaling dead-point, lowering the outputted assisting force of the mid-mounted motor to the lowest; in the process (S3), after the gear shifting completes, the micro-computer controls the outputted assisting force of the mid-mounted motor to return back to an assisting force magnitude prior to the process (S 1).

Preferably, the pedaling dead-point is an angular position of the at least one crank having a smallest pedaling torque.

Preferably, the angular position of the pedaling dead-point is either a top most point (0 degree) or a lowest point (180 degree) of a pedal.

Preferably, after the process (S1) of the motor rotational speed control logic, a process (S 1.1) is further included such that when the angular position of the at least one crank passes by a second angular position, lowering the outputted assisting force of the mid-mounted motor to a second assisting force value; and in the process (S2), the angular position of the at least one crank is not determined by whether it leaves the first angular position for lowering the outputted assisting force of the motor to the lowest but rather it is when the angular position of the at least one crank leaves the second angular position to pass by a pedaling dead-point, the micro-computer lowers the outputted assisting force of the mid-mounted motor to the lowest.

Preferably, the first angular position is an angular position of a pedal position at either 0 degree or 90 degree; wherein a top most point of the pedal position is defined as 0 degree; and the second angular position is the pedal position at either 45 degree or 135 degree.

Preferably, the first assisting force value is 50% of the highest outputted assisting force value of the motor; the second assisting force value is 30% of the highest outputted assisting force value of the motor; when the outputted assisting force of the mid-mounted motor is lowered to the lowest, it is 10% of the highest outputted assisting force value of the motor.

### BRIEF DESCRIPTION OF THE SEVERAL VIEWS OF THE DRAWINGS

FIG. 1 is a structural illustration of the first embodiment of the present invention, showing the connection relationship among the components.
FIG. 2 is an installation illustration of the first embodiment of the present invention.
FIG. 3 is a flow chart of the first preferred embodiment of the present invention, showing the processes of the motor rotational control logic.
FIG. 4 is a status illustration of the first preferred embodiment of the present invention, showing the relationship of the motor rotational speed and the time during the process of gear shifting.
FIG. 5 is a structural illustration of the second embodiment of the present invention.
FIG. 6 is an installation illustration of the second embodiment of the present invention.
FIG. 7 is a flow chart of the second preferred embodiment of the present invention.
FIG. 8 is a structural illustration of the third embodiment of the present invention.
FIG. 9 is an installation illustration of the third embodiment of the present invention.
FIG. 10 is a flow chart of the third preferred embodiment of the present invention.
FIG. 11 is an illustration of the pedal positions of the third embodiment of the present invention.
FIG. 12 is a status illustration of the third embodiment of the present invention, showing the relationship of the assisting force magnitude and the crank position during the process of gear shifting.
FIG. 13 is another flow chart of the third embodiment of the present invention.
FIG. 14 is another illustration of the pedal positions of the third embodiment of the present invention.
FIG. 15 is another status illustration of the third embodiment of the present invention, showing the relationship of the assisting force magnitude and the crank position during the process of gear shifting.
FIG. 16 is a status illustration of a known part, showing the relationship of the motor rotational speed and the time during the process of the gear shifting.

### DETAILED DESCRIPTION OF THE INVENTION

To illustrate the technical characteristics of the present invention in detail, the following provides description of preferred embodiments along with the accompanied drawings, wherein:

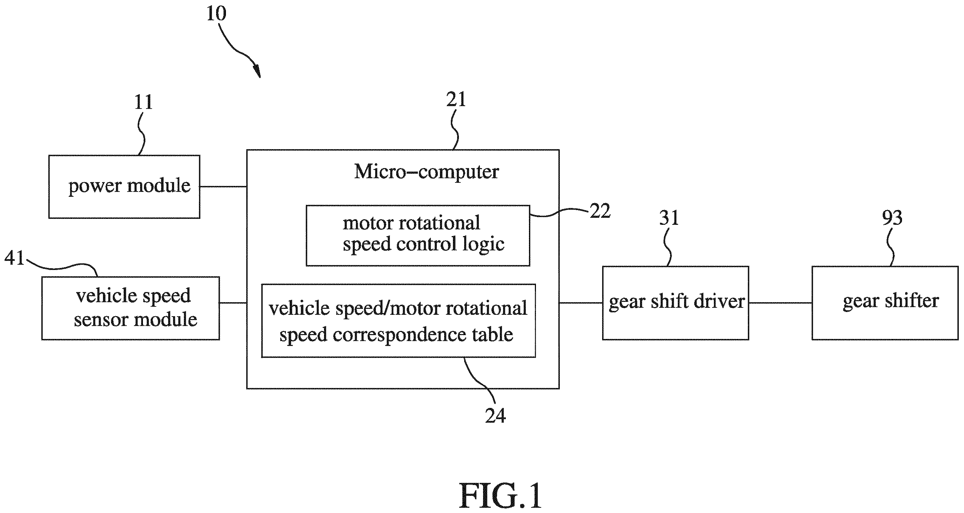

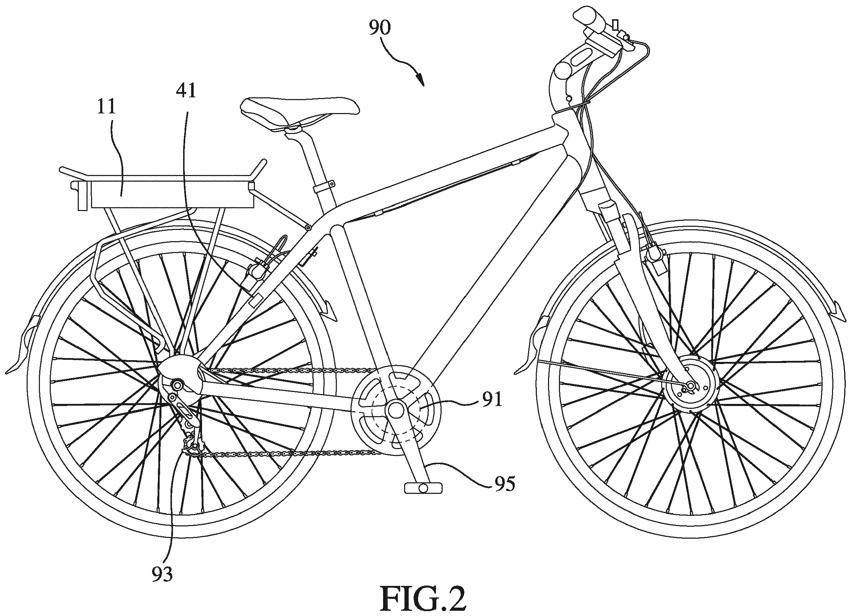

As shown in FIG. 1 to FIG. 4, a preferred embodiment of the present invention provides a gear shifting system 10 for lowering a motor rotational speed during gear shifting of a pedal-assisted bicycle, arranged on a pedal-assisted bicycle 90 having a mid-mounted motor 91 and a gear shifter 93; the gear shifting system 10 is mainly consisted of a power module 11, a micro-computer 21, a gear shift driver 31 and a vehicle speed sensor module 41; wherein:

The mid-mounted motor 91 is arranged on a bicycle frame of the pedal-assisted bicycle 90 and corresponds to five-channel pipe, which uses a chain 92 to dive the rear wheel in order to provide the assisting force.

The power module 11 can be a battery for providing the electric power.

The micro-computer 21 is electrically connected to the power module 11 and the mid-mounted motor 91 and is used for controlling an outputted assisting force and a rotational speed of the mid-mounted motor 91.

The gear shift driver 31 is electrically connected to the micro-computer 21 and physically connected to the gear shifter 93 as well as being controlled by the micro-computer 21 to drive the gear shifter 93 to perform gear shifting.

The vehicle speed sensor module 41 is electrically connected to the micro-computer 21 and is used for detecting a vehicle speed of the pedal-assisted bicycle 90. During the implementation, the vehicle speed sensor module 41 is a sensor for at least detecting the vehicle speed.

The micro-computer 21 includes a motor rotational speed control logic 22 and a vehicle speed/motor rotational speed correspondence table 24. During gear shifting, in terms of automatic gear shifting or electric gear shifting system, the timing for gear shifting is self-determined by the micro-computer 21 to perform gear shifting or to receive a gear shifting command from the rider; the micro-computer also executes the motor rotational speed control logic 22 and cooperatively controls the gear shift driver 31 to perform gear shifting. The vehicle speed/motor rotational speed correspondence table 24 refers to motor driven rotational speeds for driving the pedal-assisted bicycle 90 at various different vehicle speeds respectively.

Table 1 shows an example of the content of the vehicle speed/motor rotational speed correspondence table 24; Table 1 shown corresponds to a 7-speed pedal-assisted bicycle.

**Table 1**

| Gear Position | 1 | 2 | 3 | 4 | 5 | 6 | 7 |
|---|---|---|---|---|---|---|---|
| Gear Ratio | 1.501 | 1.760 | 2.002 | 2.349 | 2.719 | 3.171 | 3.669 |
| Vehicle Speed (km/hr) | Motor rotational speed | | | | | | |
| 2 | 96 | 81 | 72 | 61 | 53 | 45 | 39 |
| 4 | 191 | 163 | 143 | 122 | 105 | 90 | 78 |
| 6 | 287 | 244 | 215 | 183 | 158 | 136 | 117 |
| 8 | 382 | 326 | 286 | 244 | 211 | 181 | 156 |
| 10 | 478 | 407 | 358 | 305 | 264 | 226 | 195 |
| 12 | 573 | 489 | 430 | 366 | 316 | 271 | 234 |
| 14 | 669 | 570 | 501 | 427 | 369 | 317 | 274 |
| 16 | 764 | 652 | 573 | 488 | 422 | 362 | 313 |
| 18 | 860 | 733 | 645 | 549 | 475 | 407 | 352 |
| 20 | 955 | 815 | 716 | 610 | 527 | 452 | 391 |
| 22 | 1051 | 896 | 788 | 671 | 580 | 497 | 430 |
| 24 | 1146 | 978 | 859 | 733 | 633 | 543 | 469 |
| 26 | 1242 | 109 | 931 | 794 | 685 | 588 | 508 |
| 28 | 1337 | 1141 | 1003 | 855 | 738 | 633 | 547 |
| 30 | 1433 | 1222 | 1074 | 916 | 791 | 678 | 586 |

In the above Table 1, since the motor rotational speed and the vehicle speed must cooperate with the gear position, for different gear position but with the same vehicle speeds, the motor rotational speeds would also be different.

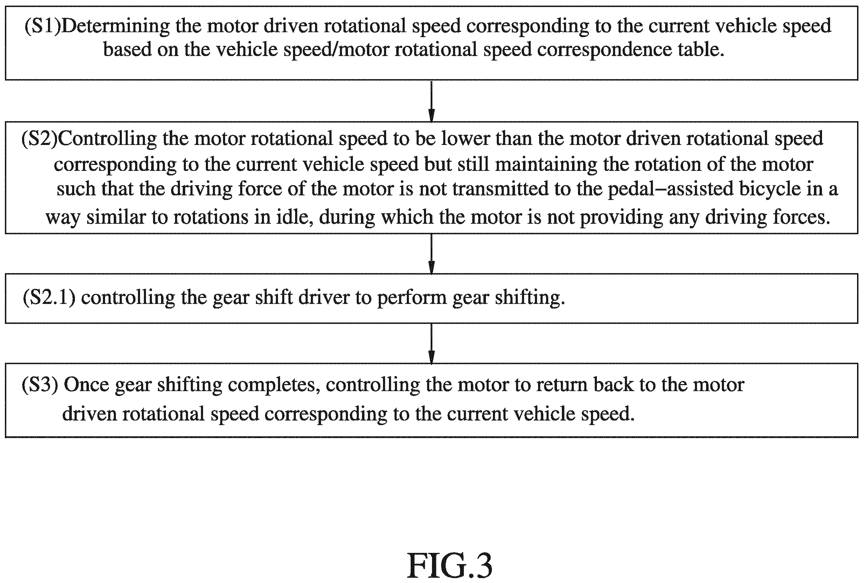

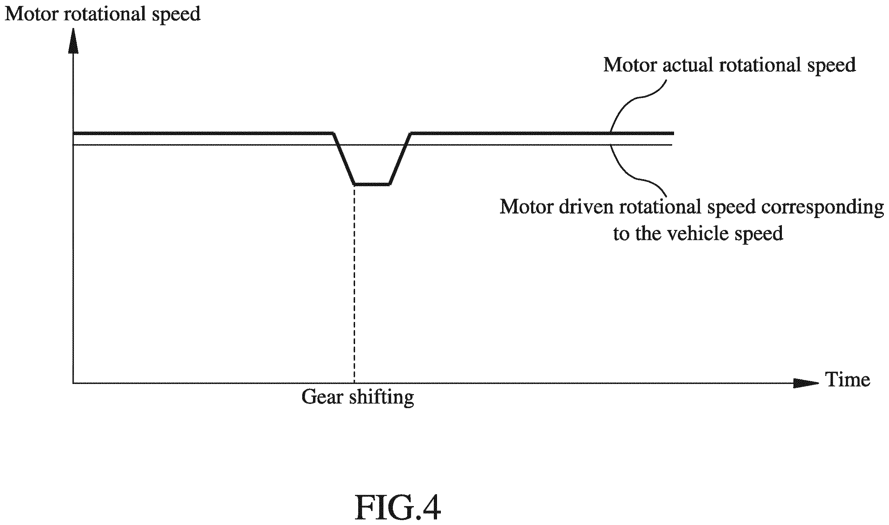

As shown in FIG. 3, a process of the micro-computer 21 executing the motor rotational speed control logic 22 includes: (S1) finding a motor driven rotational speed corresponding to a current vehicle speed based on the vehicle speed/motor rotational speed correspondence table 24; (S2) controlling the mid-mounted motor 91 to be of a rotational speed lower than the motor driven rotational speed corresponding to the current vehicle speed, as shown in FIG. 4, but still maintaining a rotation of the mid-mounted motor 91 such that a driving force of the mid-mounted motor 91 is not transmitted to the pedal-assisted bicycle 90 via the chain 92 in a way similar to an idle rotation, during which the mid-mounted motor 91 provides no driving force; (S2.1) controlling the gear shift driver 31 to perform gear shifting; (S3) after gear shifting completed, controlling the mid-mounted motor 91 to return back to a motor driven rotational speed prior to gear shifting.

In this embodiment, in the aforementioned process (S2) of controlling the mid-mounted motor 91 to have a rotational speed lower than the motor driven rotational speed corresponding to the current vehicle speed, the mid-mounted motor 91 is controlled in order to have a rotational speed being 90%∼10% of the motor driven rotational speed corresponding to the current vehicle speed, and preferably, it is 90% thereof.

In addition, the aforementioned process of the motor rotational speed control logic 22 is carried out in sequence; however, other than being carried out in sequence, it can also be introduced with some time intervals in between. For example, in the aforementioned process (S2.1), the process (S2.1) is performed after the process (S2) has been completed for a first predefined period of time; as for the process (S3); for example, the first predefined period of time is 0.1 second ∼ 0.5 second. As for the aforementioned process (S3), it is performed after the process (S2.1) has been completed for a second predefined period of time; for example, the second predefined period of time is 0.1 second ∼ 0.5 second.

Accordingly, during the riding and the process of gear shifting, the micro-computer 21 is able to lower the rotational speed of the mid-mounted motor 91 first in a way similar to an idle rotation such that the driving force would not be provided to the pedal-assisted bicycle 90 via the chain 92 in order to prevent the problems of unmatched teeth without smooth engagement, broken chain or damaged derailleur during the gear shifting of the prior art due to the pertained high assisting force. Since it is to lower the rotational speed of the mid-mounted motor 91 rather than to stop it, after the gear shifting completes, the time required to allow the mid-mounted motor 91 to return back to the original rotational speed is less (for example, the time required to allow the rotational speed to return from 90% to 100% is less than the time required to allow the rotational speed to return from 0% to 100%) and such that the user would feel that the speed of the return of the assisting force is fast without any feeling of delays.

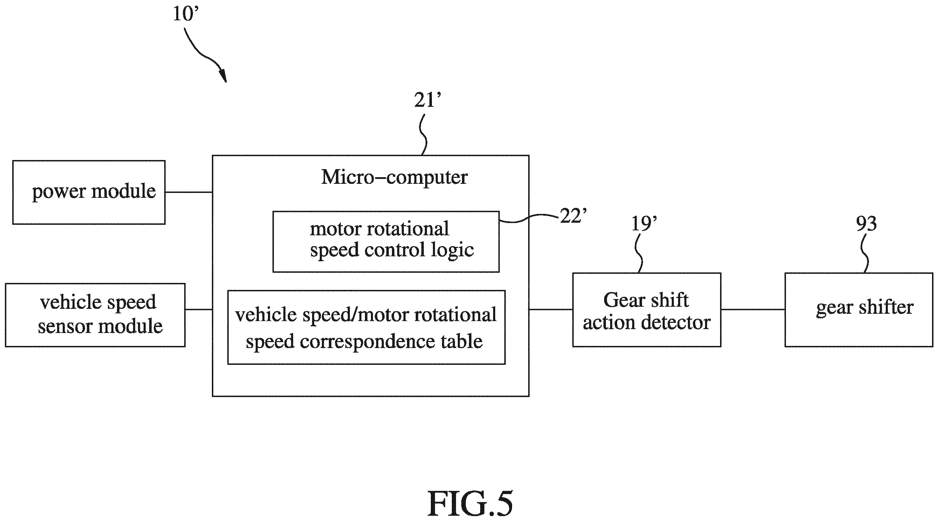

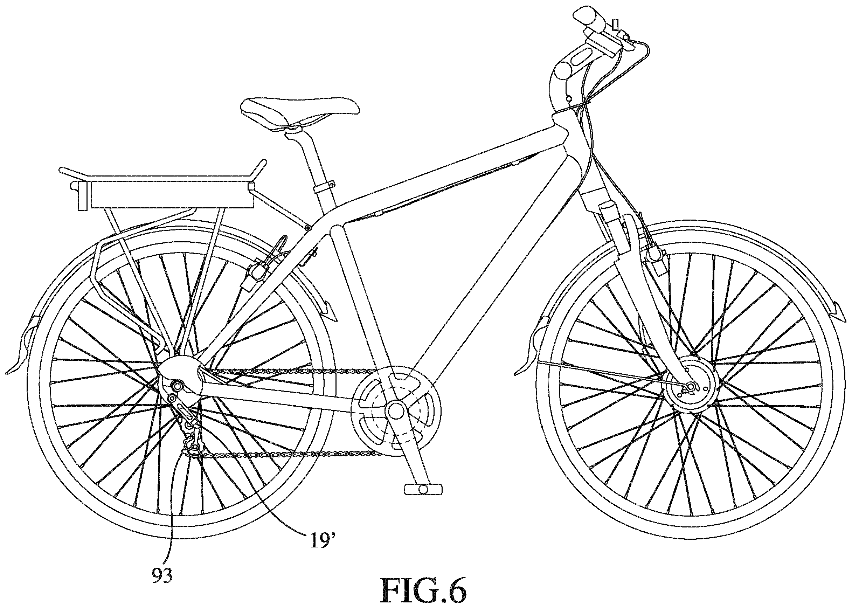

Please refer further to FIG. 5 to FIG. 7, in which a gear shifting system 10' for lowering a motor rotational speed during gear shifting of a pedal-assisted bicycle of a second embodiment of the present invention is provided and is generally identical to the first embodiment disclosed above with the differences of:

The first embodiment uses a pedal-assisted bicycle with automatic gear shifting or electric gear shifting as an example whereas the second embodiment uses a pedal-assisted bicycle with manual gear shifting as an example. Therefore, the second embodiment does not include the gear shift driver but includes a gear shift action detector 19' arranged on the gear shifter 93 and electrically connected to the micro-computer 21', which is used for detecting a gear shift action.

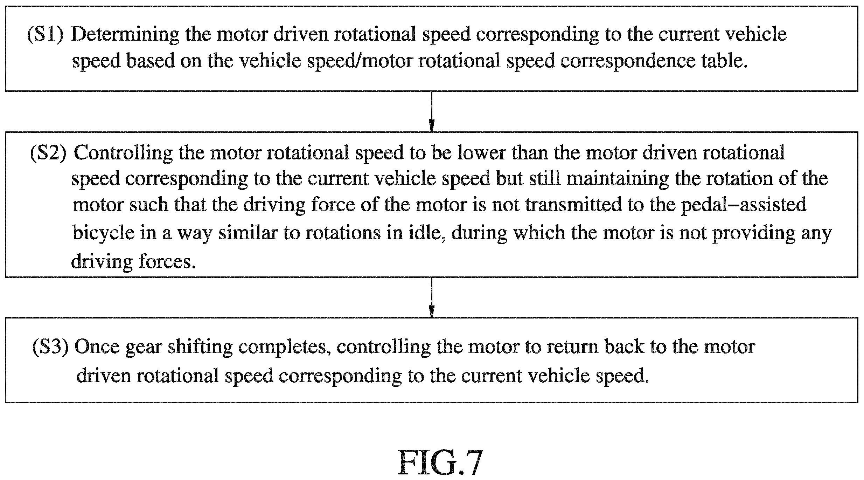

As shown in FIG. 5 and FIG. 7, a process of the motor rotational speed control logic 22' of this second embodiment does not include the process (S2.1) in the first embodiment but rather includes only the processes (S1), (S2) and (S3). Accordingly, wherein these processes can be not only carried out in sequence but also introduced with time intervals; for example, the process (S3) is performed after the process (S2) has been completed for a third predefined period of time, and the third predefined period of time is 0.1 second ∼0.5 second as an example.

Accordingly, during the manual gear shifting, the second embodiment is able to lower rotational speed of the mid-mounted motor while still achieving the effects of the aforementioned first embodiment.

It shall be further noted that in the first embodiment, since it is applied to the technology of automatic gear shifting or electric gear shifting, the gear shifting is controlled by the micro-computer; as a result, in the entire process of gear shifting, the motor rotational speed control logic can be executed prior to the start of the gear shift action. However, in this second embodiment, since it is applied to the technology of manual gear shifting, the gear shifting is performed by the gear shifter; as a result, it is detected by the gear shift action detector 19' after the gear shift action starts, which is then followed by the micro-computer to start executing the motor rotational speed control logic. Although the motor rotational speed control logic is executed after the gear shift action, it is still able to effectively lower the motor rotational speed in order to allow the gear shifting to be smooth and to overcome the problems of the prior art.

The rest of the techniques and the effects achievable by the second embodiment are generally equivalent to those of the first embodiment, therefore, they are omitted hereafter.

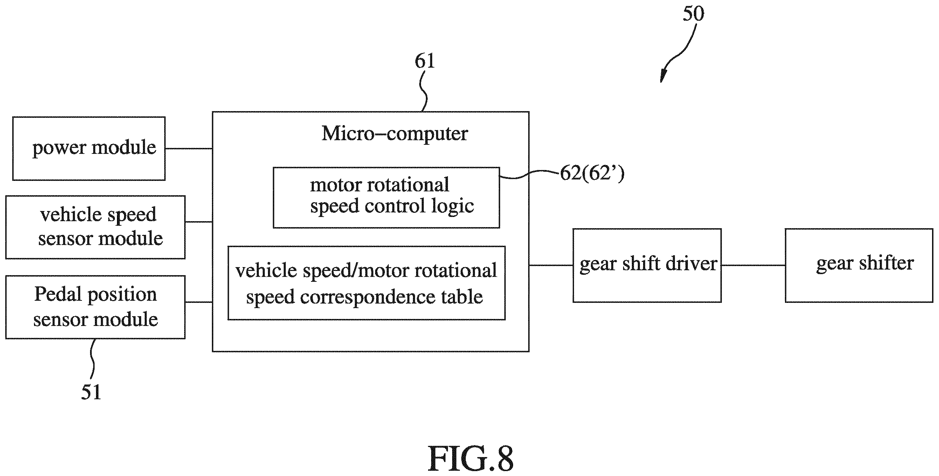

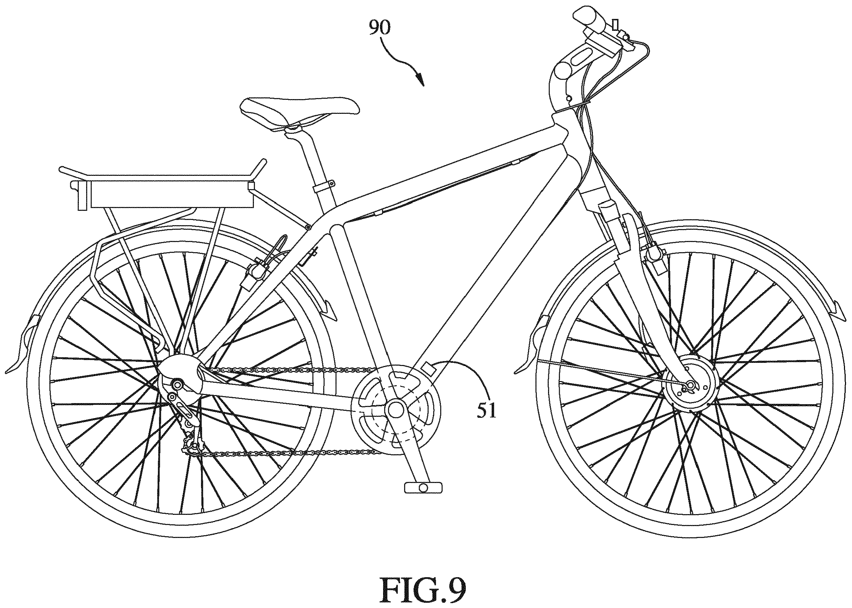

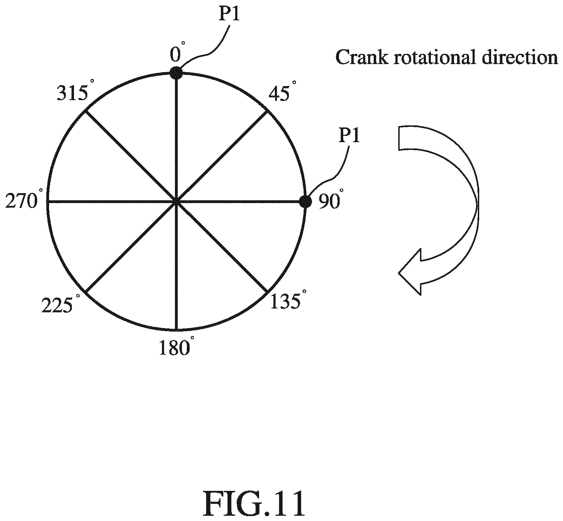

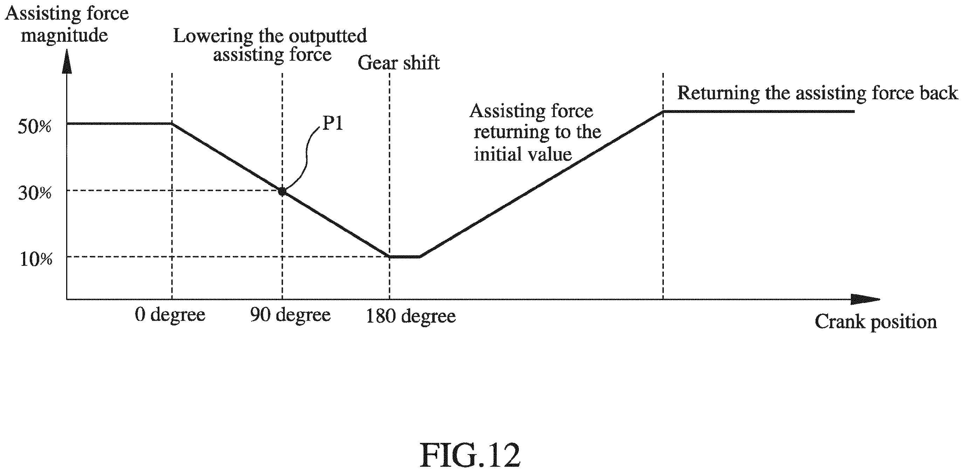

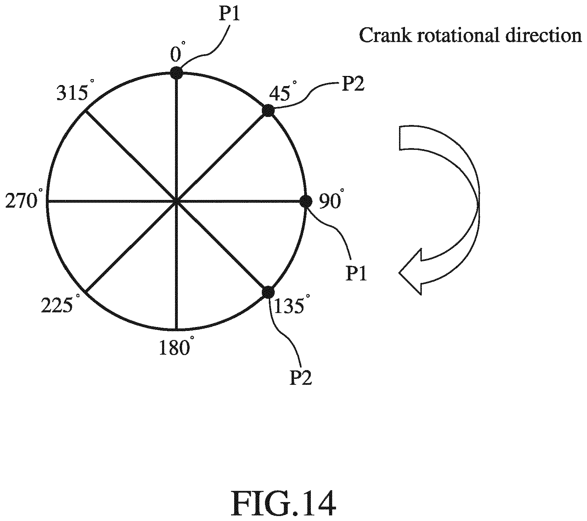

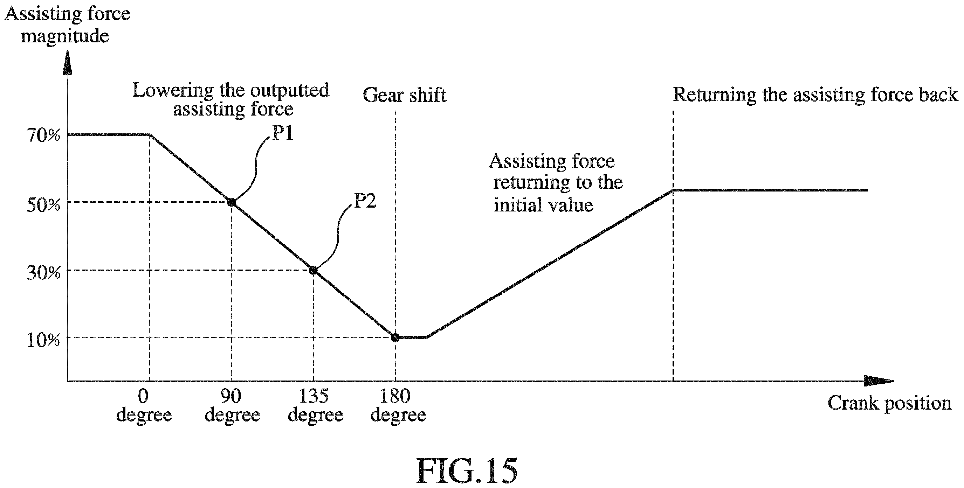

Please refer further to FIG. 8 to FIG. 15, in which a gear shifting system 50 for lowering a motor rotational speed during gear shifting of a pedal-assisted bicycle of a third embodiment of the present invention is provided and is generally identical to the aforementioned first embodiment with the differences of:

In addition to the techniques of the first embodiment, this third embodiment further uses a pedal position in combination as a factor for determination.

This third embodiment further comprises: a pedal position sensor module 51 arranged on the pedal-assisted bicycle 90 to correspond to at least one crank 95 (the quantity of more than one is used as an example in this embodiment; however, two cranks can also be used while not limited to one) of the pedal-assisted bicycle 90 and electrically connected to the micro-computer 61; the micro-computer 61 uses the pedal position sensor module 51 to obtain an angular position of the crank 95.

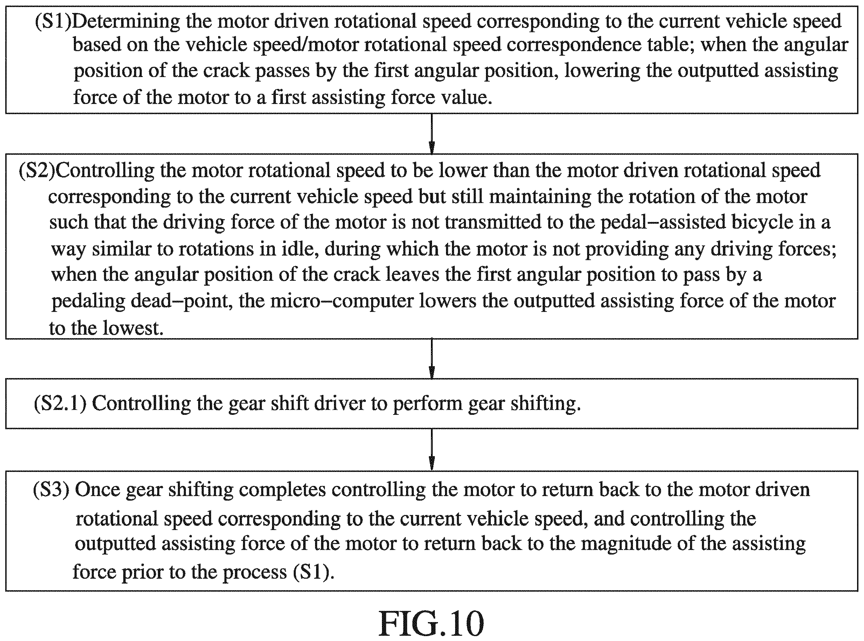

As shown in FIG. 10 to FIG. 12, as the micro-computer 61 executes the motor rotational speed control logic 62, in the process (S1), in addition to the techniques disclosed in the first embodiment, when the angular position of the crank 95 passes by a first angular position P1, lowering an outputted assisting force of the mid-mounted motor 91 to a first assisting force value; and in the process (S2), after the angular position of the crank 95 leaves the first angular position P1 to pass by a pedaling dead-point, the micro-computer 61 lowers the outputted assisting force of the mid-mounted motor 91 to the lowest. In the process (S3), after the gear shifting completes, the micro-computer 61 controls the outputted assisting force of the mid-mounted motor 91 to return back to an assisting force magnitude prior to the process (S1).

In this third embodiment, the aforementioned first angular position P1 is an angular position of a pedal position at either 0 degree of 90 degree for example; wherein a top most point of the pedal position is defined as 0 degree. The aforementioned pedaling dead-point is an angular position of the crank 95 having a smallest pedaling torque and is either a top most point (0 degree) or a lowest point (180 degree) of the pedal position. The aforementioned first assisting force value is 30% of the highest outputted assisting value of the motor.

Accordingly, in addition to the techniques and effects achievable by the first embodiment, this third embodiment further uses the pedal position of the pedal in combination as a factor for determination, which cooperates with the lowering of the assisting force value to perform gear shifting and further increases the assisting force value after the gear shifting completes such that it is able to not only control the motor rotational speed but also the assisting force value to cooperate with the gear shifting in order to allow the process of gear shifting to be smoother.

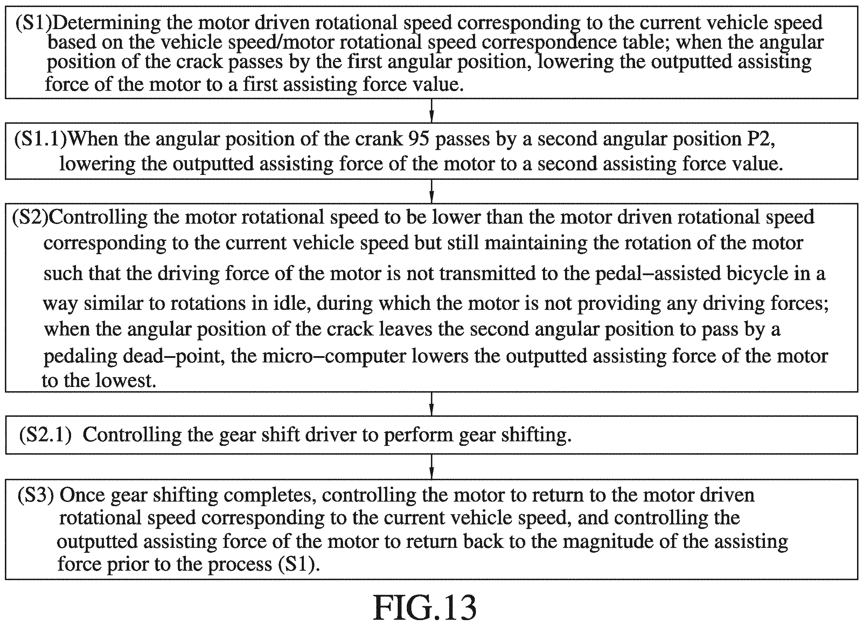

As shown in FIG. 13 to FIG. 15, in addition to the adjustment of the assisting force value, there can be further alternations: by adjusting the motor rotational speed control logic 62' (shown in FIG. 8, after the process (S1), it further comprises a process (S1.1) such that when the angular position of the crank 95 passes by a second angular position P2, lowering the outputted assisting force of the mid-mounted motor 91 to a second assisting force value; and in the process (S2), the angular position of the crank 95 is not determined by whether it leaves the first angular position P1 for lowering the outputted assisting force of the motor to the lowest but rather it is when the angular position of the crank 95 leaves the second angular position P2 to pass by a pedaling dead-point, the micro-computer 61 lowers the outputted assisting force of the mid-mounted motor 91 to the lowest.

The aforementioned second angular position P2 is the pedal position at either 45 degree or 135 degree for example.

The aforementioned first assisting force value is 50% of the highest outputted assisting force value of the motor for example; the first assisting force value is 30% of the highest outputted assisting force value of the motor; when the outputted assisting force of the mid-mounted motor 91 is lowered to the lowest, it is 10% of the highest outputted assisting force value of the motor.

Accordingly, the lowering of the assisting force value is not done all at one time only but is done discretely to lower to the first assisting force value and to the second assisting force value gradually.

The rest of the techniques and effects achievable by the third embodiment are generally identical to those of the first embodiment; therefore, they are omitted hereafter.

A further supplement to be noted here is that in the vehicle speed/motor rotational speed correspondence table 24, it includes the motor driven rotational speeds corresponding to each one of the vehicle speeds; however, if the situation where the current vehicle speed of the pedal-assisted bicycle is not listed in the vehicle speed/motor rotational speed correspondence table 24 occurs, then the micro-computer is able to select a vehicle speed from the table that is closest to the current vehicle speed and/or to find out two adjacent vehicle speeds of the current vehicle speed from the table in order to further perform a linear calculation method to calculate the corresponding motor driven rotational speed.

## Claims

1. A gear shifting system (10, 10', 50) for lowering a motor rotational speed during gear shifting of a pedal-assisted bicycle, arranged on a pedal-assisted bicycle (90) having a mid-mounted motor (91) and a gear shifter (93), being **characterized in that** the gear shifting system (10) comprising:
a power module (11);
a micro-computer (21, 21', 61) electrically connected to the power module (11) and the mid-mounted motor (91) and used for controlling an outputted assisting force and a rotational speed of the mid-mounted motor (91); and
a vehicle speed sensor module (41) electrically connected to the micro-computer (21, 21', 61) and used for detecting a vehicle speed of the pedal-assisted bicycle (90);
the micro-computer (21, 21', 61) having a motor rotational speed control logic (22, 22', 62, 62') and a vehicle speed/motor rotational speed correspondence table (24);
during gear shifting (93), the micro-computer (21, 21', 61) executing the motor rotational speed control logic (22, 22',62, 62') the vehicle speed/motor rotational speed correspondence table (24) referring to motor driven rotational speeds for driving the pedal-assisted bicycle (90) at various different vehicle speeds respectively;
a process of the micro-computer (21, 21', 61) executing the motor rotational speed control logic (22, 22', 62, 62') **characterized by** including: (S1) finding a motor driven rotational speed corresponding to a current vehicle speed based on the vehicle speed/motor rotational speed correspondence table; (S2) controlling the mid-mounted motor (91) to be of a rotational speed lower than the motor driven rotational speed corresponding to the current vehicle speed but still maintaining a rotation of the mid-mounted motor (91) such that a driving force of the mid-mounted motor (91) is not transmitted to the pedal-assisted bicycle (90) in a way similar to an idle rotation, during which the mid-mounted motor (91) provides no driving force; (S3) after gear shifting completed, controlling the mid-mounted motor (91) to return back to a motor driven rotational speed prior to gear shifting.

2. The gear shifting system (10, 10', 50) for lowering a motor rotational speed during gear shifting of a pedal-assisted bicycle according to Claim 1, wherein: in the process (S2) of the motor rotational speed control logic (22, 22', 62, 62') the mid-mounted motor (91) is controlled in order to have a rotational speed being 90%~10% of the motor driven rotational speed corresponding to the current vehicle speed.

3. The gear shifting system (10, 10', 50) for lowering a motor rotational speed during gear shifting of a pedal-assisted bicycle according to Claim 1, wherein: in the process (S2) of the motor rotational speed control logic (22, 22', 62 , 62'), the rotational speed of the mid-mounted motor (91) is controlled to be 90% of the motor driven rotational speed corresponding to the current vehicle speed.

4. The gear shifting system (10, 50) for lowering a motor rotational speed during gear shifting of a pedal-assisted bicycle according to Claim 1, wherein: further comprising a gear shift driver (31) electrically connected to the micro-computer (21, 61) and physically connected to the gear shifter as well as being controlled by the micro-computer (21, 61) to drive the gear shifter to perform gear shifting; during the gear shifting, the micro-computer (21, 61) executes the motor rotational speed control logic (22, 62, 62') and cooperatively controls the gear shift driver (31) to perform the gear shifting; after the process (S2) of the motor rotational speed control logic (22, 62, 62') a process (S2.1) is further included for controlling the gear shift driver (31) to perform gear shifting.

5. The gear shifting system (10, 50) for lowering a motor rotational speed during gear shifting of a pedal-assisted bicycle according to Claim 4, wherein: a timing for gear shifting is self-determined by the micro-computer (21, 61) to perform gear shifting or to receive a gear shifting command from a rider.

6. The gear shifting system (10, 50) for lowering a motor rotational speed during gear shifting of a pedal-assisted bicycle according to Claim 4, wherein: the process (S2.1) of the motor rotational speed control logic (22, 62, 62') is performed after the process (S2) has been completed for a first predefined period of time; as for the process (S3), it is performed after the process (S2.1) has been completed for a second predefined period of time.

7. The gear shifting system (10, 50) for lowering a motor rotational speed during gear shifting of a pedal-assisted bicycle according to Claim 6, wherein: the first predefined period of time is 0.1 second ∼ 0.5 second; the second predefined period of time is 0.1 second ∼ 0.5 second.

8. The gear shifting system (10') for lowering a motor rotational speed during gear shifting of a pedal-assisted bicycle according to Claim 1, wherein: further comprising a gear shift action detector (19') arranged at the gear shifter and electrically connected to the micro-computer (21'), used for detecting a gear shift action.

9. The gear shifting system (10') for lowering a motor rotational speed during gear shifting of a pedal-assisted bicycle according to Claim 1, wherein the process (S3) of the motor rotational speed control logic (22') is performed after the process (S2) has been completed for a third predefined period of time.

10. The gear shifting system (50) for lowering a motor rotational speed during gear shifting of a pedal-assisted bicycle according to Claim 1, wherein: further comprising a pedal position sensor module (51) arranged on the pedal-assisted bicycle (90) to correspond to at least one crank (95) of the pedal-assisted bicycle (90) and electrically connected to the micro-computer (61); the micro-computer (61) uses the pedal position sensor module (51) to obtain an angular position of the at least one crank (95); as the micro-computer (61) executes the motor rotational speed control logic (62, 62') in the process (S1), when the angular position of the at least one crank (95) passes by a first angular position (P1), lowering an outputted assisting force of the mid-mounted motor (91) to a first assisting force value; and in the process (S2), after the angular position of the at least one crank (95) leaves the first angular position (P1) to pass by a pedaling dead-point, lowering the outputted assisting force of the mid-mounted motor (91) to the lowest; in the process (3), after the gear shifting completes, the micro-computer (61) controls the outputted assisting force of the mid-mounted motor (91) to return back to an assisting force magnitude prior to the process (S1).

11. The gear shifting system (50) for lowering a motor rotational speed during gear shifting of a pedal-assisted bicycle according to Claim10, wherein: the pedaling dead-point is an angular position of the at least one crank (95) having a smallest pedaling torque.

12. The gear shifting system (50) for lowering a motor rotational speed during gear shifting of a pedal-assisted bicycle according to Claim11, wherein: the angular position of the pedaling dead-point is either a top most point (0 degree) or a lowest point (180 degree) of a pedal.

13. The gear shifting system (50) for lowering a motor rotational speed during gear shifting of a pedal-assisted bicycle according to Claim 10, wherein: after the process (S1) of the motor rotational speed control logic (62'), a process (S1.1) is further included such that when the angular position of the at least one crank (95) passes by a second angular position (P2), lowering the outputted assisting force of the mid-mounted motor (91) to a second assisting force value; and in the process (S2), the angular position of the at least one crank (95) is not determined by whether it leaves the first angular position (P1) for lowering the outputted assisting force of the motor to the lowest but rather it is when the angular position of the at least one crank (95) leaves the second angular position (P2) to pass by a pedaling dead-point, the micro-computer (61) lowers the outputted assisting force of the mid-mounted motor (91) to the lowest.

14. The gear shifting system (50) for lowering a motor rotational speed during gear shifting of a pedal-assisted bicycle according to Claim 13, wherein: the first angular position (P1) is an angular position of a pedal position at either 0 degree of 90 degree; wherein a top most point of the pedal position is defined as 0 degree; and the second angular position (P2) is the pedal position at either 45 degree or 135 degree.

15. The gear shifting system (50) for lowering a motor rotational speed during gear shifting of a pedal-assisted bicycle according to Claim 13, wherein: the first assisting force value is 50% of the highest outputted assisting force value of the motor; the second assisting force value is 30% of the highest outputted assisting force value of the motor; when the outputted assisting force of the mid-mounted motor (91) is lowered to the lowest, it is 10% of the highest outputted assisting force value of the motor.

## Patentansprüche

1. Gangsschaltungs-System (10,10',50) zur Absenkung der Motor-Drehzahl während eines Schaltvorganges eines Pedal-betriebenen Fahrrads, welches an einem Pedal-betriebenen Fahrrad (90) mit einem in der Mitte angebrachten Motor (91) und einem Schalthebel (93) vorgesehen ist, **dadurch gekennzeichnet, dass** das Gangsschaltungs-System (10) umfasst:
ein Leistungs-Modul (11);
einen Mikro-Computer (21,21',61), der mit dem Leistungs-Modul (11) und dem in der Mitte angebrachten Motor (91) elektrisch verbunden ist und dazu verwendet wird, eine ausgegebene Hilfs-Kraft und die Drehzahl des in der Mitte angebrachten Motors (91) zu steuern; und
ein Fahrzeug-Geschwindigkeits-Sensor-Modul (41), das mit dem Mikro-Computer (21,21',61) elektrisch verbunden ist und dazu verwendet wird, eine Fahrzeug-geschwindigkeit des Pedal-betriebenen Fahrrads (90) zu erfassen;
worin der Mikro-Computer (21,21',61) eine Motor-Drehzahl-Steuerlogik (22,22',62,62') und eine Fahrzeug-Geschwindigkeit/Motor-Drehzahl Korrespondenz-Tabelle (24) aufweist; wobei während eines Schaltvorgangs (93), der Micro-Computer (21,21',61) die Motor-Drehzahl Steuer-Logik (22,22',62,62') ausführt und die Fahrzeug-Geschwindigkeits/Motor-Drehzahl-Korrespondenz-Tabelle (24) auf von Motor angetriebenen Drehzahlbereiche Bezug nimmt, um das Pedal-betriebenen Fahrrad (90) in jeweils unterschiedlichen Fahrzeug-Geschwindigkeiten anzutreiben;
wobei ein Prozess, dass der Mikro-Computer (21,21',61) die Motor-Drehzahl-Steuer-Logik (22,22',62,62') ausführt beinhaltet: (S1) Auffinden einer Motor-angetriebenen Drehzahl entsprechend einer gegenwärtigen Fahrzeug-Geschwindigkeit basierend auf der Fahrzeug-Geschwindigkeit/Motor-Drehzahl-Korrespondenz-Tabelle; (S2) Steuern des in der Mitte angebrachten Motors (91), so dass dieser eine Drehzahl unter der Motor-angetriebenen Drehzahl entsprechend der gegenwärtigen Fahrzeug-Geschwindigkeit aufweist, wobei jedoch noch eine Umdrehung des in der Mitte angebrachten Motors (91) beibehalten wird, so dass eine Antriebskraft des in der Mitte angebrachten Motors (91) auf das Pedal-betriebene Fahrrad (90) nicht in einer Art und Weise ähnlich eines Leerlaufs übertragen wird, während der in der Mitte angebrachte Motor (91) keine Antriebskraft liefert; (S3) nachdem der Schaltvorgang beendet ist, Steuern des in der Mitte angebrachten Motors (91), um zu einer Motor-angetriebenen Drehzahl vor dem Schaltvorgang zurückzukehren.

2. Gangsschaltungs-System (10,10',50) zum Absenken der Motor-Drehzahl während des Schaltvorgangs eines Pedal-betriebenen Fahrrads nach Anspruch 1, worin: bei dem Prozess (S2) der Motor-Drehzahl-Steuer-Logik (22,22',62,62'), der in der Mitte angebrachte Motor (91) gesteuert wird, um eine Drehzahl zu erhalten, die 90% ∼ 10% der Motor-angetriebenen Drehzahl entsprechend der gegenwärtigen Fahrzeug-Geschwindigkeit ist.

3. Gangsschaltungs-System (10,10',50) zum Absenken der Motor-Drehzahl während des Schaltvorgangs eines Pedal-betriebenen Fahrrads nach Anspruch 1, worin: bei dem Prozess (S2) der Motor-Drehzahl-Steuer-Logik (22,22',62,62'), die Drehzahl des in der Mitte angebrachten Motors (91) gesteuert wird, um bei 90% der Motor-angetriebenen Drehzahl entsprechend der gegenwärtigen Fahrzeug-Geschwindigkeit zu sein.

4. Gangsschaltungs-System (10,50) zum Absenken der Motor-Drehzahl während des Schaltvorgangs eines Pedal-betriebenen Fahrrads nach Anspruch 1, worin: weiter umfassend ein Gangschschalt-Treiber (31), der mit dem Mikro-Computer (21,61) elektrisch und mit dem Umleger körperlich verbunden ist, sowie durch den Micro-Computer (21,61) gesteuert wird, um den Umleger dazu zu bringen, einen Schaltvorgang durchzuführen; wobei während des Schaltvorgangs, der Mikro-Computer (21,61) die Motor-Drehzahl-Steuer-Logik (22,62,62') ausführt und den Gangschaltungs-Treiber (31) kooperativ dazu bringt, den Schaltvorgang durchzuführen; wobei nach dem Prozess (S2) der Motor-Drehzahl Steuer-Logik (22,62,62'), ein weiter Prozess (S2.1) beinhaltet ist, den Gangschaltungs-Treiber (31) zu steuern, den Schaltvorgang durchzuführen.

5. Gangsschaltungs-System (10,50) zum Absenken der Motor-Drehzahl während des Schaltvorgangs eines Pedal-betriebenen Fahrrads nach Anspruch 4, worin: ein Zeitpunkt für den Schaltvorgang durch den Mikro-Computer (21,61) selbst bestimmt wird, um den Schaltvorgang durchzuführen oder einen Schaltvorgangs-Befehl von einem Fahrer zu erhalten.

6. Gangsschaltungs-System (10,50) zum Absenken der Motor-Drehzahl während des Schaltvorgangs eines Pedal-betriebenen Fahrrads nach Anspruch 4, worin: der Prozess (S2.1) der Motor-Drehzahl Steuer-Logik (22,62,62') nachdem der Prozess (S2) beendet wurde für eine erste bestimmte Zeitspanne durchgeführt wird; wobei wie für den Prozess (S3), dieser nachdem der Prozess (S2.1) beendet wurde, für eine zweite bestimmte Zeitspanne durchgeführt wird.

7. Gangsschaltungs-System (10,50) zum Absenken der Motor-Drehzahl während des Schaltvorgangs eines Pedal-betriebenen Fahrrads nach Anspruch 6, worin: die erste bestimmte Zeitspanne 0,1 Sekunden ∼ 0,5 Sekunden ist; wobei die zweite bestimmte Zeitspanne 0,1 Sekunden ∼ 0,5 Sekunden ist.

8. Gangsschaltungs-System (10') zum Absenken der Motor-Drehzahl während des Schaltvorgangs eines Pedal-betriebenen Fahrrads nach Anspruch 1, worin: weiter umfassend ein Schaltungsvorgang-Detektor (19') vorgesehen ist, der am Gangschalthebel angeordnet und mit dem Micro-Computer (21') elektrisch verbunden ist, und zur Erfassung eines Schaltvorgangs verwendet wird.

9. Gangsschaltungs-System (10') zum Absenken der Motor-Drehzahl während des Schaltvorgangs eines Pedal-betriebenen Fahrrads nach Anspruch 1, wobei der Prozess (S3) der Motor-Drehzahl Steuer-Logik (22') nachdem der Prozess (S2) beendet wurde, für eine dritte bestimmt Zeitspanne durchgeführt wird.

10. Gangsschaltungs-System (50) zum Absenken der Motor-Drehzahl während des Schaltvorgangs eines Pedal-betriebenen Fahrrads nach Anspruch 1, worin: weiter umfassend ein Pedal-Positions-Sensormodul (51), das an dem Pedal-betriebenen Fahrrad (90) angeordnet ist, um mindestens einer Kurbel (95) des Pedal-betriebenen Fahrrads (90) zu entsprechen und mit dem Mikro-Computer (61) elektrisch verbunden ist; wobei der Mikro-Computer (61) das Pedal-Positionssensor-Modul (51) dazu verwendet, eine Winkelposition der mindestens einen Kurbel (95) zu erfassen; wobei wenn der Mikro-Computer (61) die Motor-Drehzahl Steuer-Logik (62,62') ausführt, bei dem Prozess (S1), wenn die Winkelposition der mindestens einen Kurbel (95) eine erste Winkelposition (P1) passiert, eine ausgegebene Hilfs-Kraft des in der Mitte angebrachten Motors (91) auf einen ersten Hilfs-Kraft Wert absenkt; und wobei bei dem Prozess (S2), nachdem die Winkelposition der mindestens einen Kurbel (95) die erste Winkelposition (P1) verlässt, um einen Pedal-Totpunkt zu passieren, die ausgegebene Hilfs-Kraft des in der Mitte angebrachten Motors (91) auf den geringsten Wert abgesenkt wird; wobei bei dem Prozess (43), nachdem der Schaltvorgang beendet ist, der Mikro-Computer (61) die ausgegebene Hilfs-Kraft des in der Mitte angebrachten Motors (91) auf eine Hilfs-Kraft-Größenordnung vor dem Prozess (S1) zurückbringt.

11. Gangsschaltungs-System (50) zum Absenken der Motor-Drehzahl während des Schaltvorgangs eines Pedal-betriebenen Fahrrads nach Anspruch 10, worin: der Pedal-Totpunkt eine Winkelposition der mindestens einen Kurbel (95) mit der kleinsten Pedalkraft ist.

12. Gangsschaltungs-System (50) zum Absenken der Motor-Drehzahl während des Schaltvorgangs eines Pedal-betriebenen Fahrrad nach Anspruch 11, worin: die Winkelposition des Pedal-Totpunkts entweder der höchste Punkt (0 Grad) oder der tiefste Punkt (180 Grad) eines Pedal ist.

13. Gangsschaltungs-System (50) zum Absenken der Motor-Drehzahl während des Schaltvorgangs eines Pedal-betriebenen Fahrrads nach Anspruch 10, worin: nach dem Prozess (S1) der Motor-Drehzahl Steuer-Logik (62'), weiter ein Prozess (S1.1) beinhaltet ist, so dass wenn die Winkelposition der mindestens einen Kurbel (95) eine zweite Winkelposition (P2) passiert, die ausgegebene Hilfs-Kraft des in der Mitte angebrachten Motors (91) auf einen zweiten Hilfs-Kraft-Wert gesenkt wird; und wobei bei dem Prozess (S2), die Winkelposition der mindestens einen Kurbel (95) nicht dadurch bestimmt wird, ob diese die erste Winkelposition (P1) verlässt, um die ausgegebene Hilfs-Kraft des Motors auf den geringsten Wert zu senken, sondern der Mikro-Computer (61) senkt, wenn die Winkelposition der mindestens einen Kurbel (95) die zweite Winkelposition (P2) verlässt, um einen Pedal-Totpunkt zu passieren, die ausgegebene Hilfs-Kraft des in der Mitte angebrachten Motor (91) auf die Geringste ab.

14. Gangsschaltungs-System (50) zum Absenken der Motor-Drehzahl während des Schaltvorgangs eines Pedal-betriebenen Fahrrads nach Anspruch 13, worin: die erste Winkelposition (P1) eine Winkelposition einer Pedal-Position an entweder 0 Grad oder 90 Grad ist; worin der höchste Punkt der Pedal-Position als 0 Grad definiert wird; und die zweite Winkelposition (P2) die Pedal-Position bei entweder 45 Grad oder 135 Grad ist.

15. Gangsschaltungs-System (50) zum Absenken der Motor-Drehzahl während des Schaltvorgangs eines Pedal-betriebenen Fahrrads nach Anspruch 13, worin: der erste Hilfs-Kraft Wert 50% des höchsten ausgegebenen Hilfs-Kraft-Wertes des Motors ist; worin der zweite Hilfs-Kraft Wert 30% des höchsten ausgegebenen Hilfs-Kraft-Wertes des Motors ist; wenn die ausgegebene Hilfs-Kraft des in der Mitte angebrachten Motors (91) auf den geringsten Wert abgesenkt wird, ist sie 10% des höchsten ausgegebenen Hilfs-Kraft-Wertes des Motors.

## Revendications

1. Système de changement de vitesses (10, 10', 50) pour abaisser une vitesse de rotation de moteur pendant le changement de vitesse d'une bicyclette assistée par pédale, disposé sur une bicyclette assistée par pédale (90) ayant un moteur monté en position centrale (91) et un sélecteur de vitesses (93), étant **caractérisée en ce que** le système de changement de vitesse (10) comprend :
un module de puissance (11) ;
un micro-ordinateur (21, 21', 61) connecté électriquement au module de puissance (11) et au moteur monté en position centrale (91) et utilisé pour commander une force d'assistance et une vitesse de rotation du moteur monté en position centrale (91) ; et
un module de capteur de vitesse de véhicule (41) connecté électriquement au micro-ordinateur (21, 21', 61) et utilisé pour détecter une vitesse de véhicule de la bicyclette assistée par pédale (90) ;
le micro-ordinateur (21, 21', 61) ayant une logique de commande de vitesse de rotation de moteur (22, 22', 62, 62') et une table de correspondance de vitesse de rotation du moteur/vitesse du véhicule (24) ;
pendant le changement de vitesse (93), le micro-ordinateur (21, 21', 61) exécute la logique de commande de vitesse de rotation du moteur (22, 22', 62, 62`), la table de correspondance de vitesse de rotation de moteur/vitesse de véhicule (24) faisant référence aux vitesses de rotation entraînée du moteur pour entraîner la bicyclette assistée par pédale (90) à diverses vitesses de véhicule différente respectivement ;
un processus du micro-ordinateur (21, 21'61) exécutant la logique de commande de vitesse de rotation de moteur (22, 22', 62, 62'), **caractérisé en ce qu'**il inclut de :
(S1) trouver une vitesse de rotation entraînée du moteur correspondant à une vitesse de véhicule actuelle sur la base de la table de correspondance de vitesse de rotation de moteur/ vitesse de véhicule ;
(S2) commander le moteur monté en position centrale (91) pour qu'il soit à une vitesse de rotation inférieure à la vitesse de rotation entraînée du moteur correspondant à la vitesse de véhicule actuelle mais en conservant toujours une rotation du moteur monté en position centrale (91) de sorte qu'une force d'entraînement du moteur monté en position centrale (91) ne soit pas transmise à la bicyclette assistée par pédale (90) d'une manière similaire à une rotation de ralenti, pendant laquelle le moteur monté en position centrale (91) ne fournit pas de force d'entraînement ;
(S3) après la fin du changement de vitesses, commander le moteur monté en position centrale (91) afin qu'il revienne à une vitesse de rotation entraînée du moteur antérieure au changement de vitesses.

2. Système de changement de vitesses (10, 10', 50) pour abaisser une vitesse de rotation de moteur pendant un changement de vitesse d'une bicyclette assistée par pédale selon la revendication 1, dans lequel : dans le processus (S2) de logique de commande de vitesse de rotation de moteur (22, 22', 62, 62'), le moteur monté en position centrale (91) est commandé de manière à avoir une vitesse de rotation étant 90%∼10% de la vitesse de rotation entraînée du moteur correspondant à la vitesse de véhicule actuelle.

3. Système de changement de vitesses (10, 10', 50) pour abaisser une vitesse de rotation du moteur pendant un changement de vitesses d'une bicyclette assisté par pédale selon la revendication 1, dans lequel : dans le processus (S2) de la logique de commande de vitesse de rotation du moteur (22, 22', 62, 62'), la vitesse de rotation du moteur monté en position centrale (91) est commandé afin d'être 90% de la vitesse de rotation entraînée du moteur correspondant à la vitesse de véhicule actuelle.

4. Système de changement de vitesses (10, 50) pour abaisser une vitesse de rotation du moteur pendant un changement de vitesses d'une bicyclette assistée par pédale selon la revendication 1, dans lequel :
comprenant en outre un pilote de changement de vitesses (31) connecté électriquement au micro-ordinateur (21, 61) et connecté physiquement au sélecteur de vitesses de même qu'étant commandé par le micro-ordinateur (21, 61) pour amener le sélecteur de vitesses à effectuer un changement de vitesses, le micro-ordinateur (21, 61) exécute la logique de commande de vitesse de rotation du moteur (22, 62, 62') et commande coopérativement le pilote de changement de vitesses (31) afin d'effectuer le changement de vitesses ; après le processus (S2) de la logique de commande de vitesse de rotation du moteur (22, 62, 62'), un processus (S2.1) est en outre inclus pour commander le pilote de changement de vitesses (31) à effectuer un changement de vitesses.

5. Système de changement de vitesses (10, 50) pour abaisser une vitesse de rotation de moteur pendant un changement de vitesses d'une bicyclette assistée par pédale selon la revendication 4, dans lequel : une temporisation de changement de vitesses est autodéterminée par le micro-ordinateur (21, 61) pour effectuer un changement de vitesses ou recevoir une commande de changement de vitesses d'un cycliste.

6. Système de changement de vitesses (10, 50) pour abaisser une vitesse de rotation de moteur pendant un changement de vitesses d'une bicyclette assistée par pédale selon la revendication 4, dans lequel : le processus (S2.1) de la logique de commande de vitesse de rotation du moteur (22, 62, 62') est effectué après que le processus (S2) a pris fin pendant une première période de temps prédéfinie ; comme pour le processus (S3), il est effectué après que le processus (S2.1) a pris fin pendant une seconde période de temps prédéfinie.

7. Système de changement de vitesses (10, 50) pour abaisser une vitesse de rotation de moteur pendant un changement de vitesses d'une bicyclette assistée par pédale selon la revendication 6, dans lequel : la première période de temps prédéfinie est 0.1 seconde ∼ 0.5 seconde, la seconde période de temps prédéfinie est 0.1 seconde ∼0.5 seconde.

8. Système de changement de vitesses (10') pour abaisser une vitesse de rotation de moteur pendant un changement de vitesses d'une bicyclette assistée par pédale selon la revendication 1, dans lequel : comprenant en outre un détecteur d'action de changement de vitesse (19') disposé au niveau du sélecteur de vitesse et connecté électriquement au micro-ordinateur (21'), utilisé pour détecter une action de changement de vitesses.

9. Système de changement de vitesses (10') pour abaisser une vitesse de rotation de moteur pendant un changement de vitesses d'une bicyclette assistée par pédale selon la revendication 1, dans lequel le processus (S3) de la logique de commande de vitesse de rotation du moteur (22') est effectué après que le processus (S2) a pris fin pendant une troisième période de temps prédéfinie.

10. Système de changement de vitesses (50) pour abaisser une vitesse de rotation de moteur pendant un changement de vitesses d'une bicyclette assistée par pédale selon la revendication 1, dans lequel : comprenant en outre un module de capteur de position de pédale (51) disposé sur la bicyclette assistée par pédale (90) pour correspondre à au moins un pédalier (95) de la bicyclette assistée par pédale (90) et connecté électriquement au micro-ordinateur (61) ; le micro-ordinateur (61) utilise le module de capteur de position de pédale (51) pour obtenir une position angulaire d'au moins un pédalier (95) ; lorsque le micro-ordinateur (61) exécute la logique de commande de vitesse de rotation du moteur (62, 62') dans le processus (S1), lorsque la position angulaire d'au moins un pédalier (95) passe par une première position angulaire (P1), abaisser une force d'assistance sortie du moteur monté en position centrale (91) à une première valeur de force d'assistance ; et, dans le processus (S2), après que la position angulaire d'au moins un pédalier (95) quitte la première position angulaire (P1) pour passer par un point mort de pédalage, abaisser la force d'assistance sortie du moteur monté en position centrale (91) au plus bas ; dans le processus (3), après la fin du changement de vitesse, le micro-ordinateur (61) commande la force d'assistance sortie du moteur placé en position centrale (91) afin de revenir à une magnitude de force d'assistance antérieure au processus (S1).

11. Système de changement de vitesses (50) pour abaisser une vitesse de rotation de moteur pendant un changement de vitesses d'une bicyclette assistée par pédale selon la revendication 10, dans lequel : le point mort de pédalage est une position angulaire d'au moins un pédalier (95) ayant un couple de pédalage le plus petit.

12. Système de changement de vitesses (50) pour abaisser une vitesse de rotation de moteur pendant un changement de vitesses d'une bicyclette assistée par pédale selon la revendication 11, dans lequel : la position angulaire du point mort de pédalage est soit un point le plus haut (0 degrés) soit un point le plus bas (180 degrés) d'une pédale.

13. Système de changement de vitesses (50) pour abaisser une vitesse de rotation de moteur pendant un changement de vitesses d'une bicyclette assistée par pédale selon 10, dans lequel : après le processus (S1) de la logique de commande de vitesse de rotation de moteur (62'), un processus (S1.1) est en outre inclus de sorte que lorsque la position angulaire d'au moins un pédalier (95) passe par une seconde position angulaire (P2), abaisser la force d'assistance sortie du moteur monté en position centrale (91) à une seconde valeur de force d'assistance ; et dans le processus (S2), la position angulaire d'au moins un pédalier (95) n'est pas déterminée par le fait qu'il quitte la première position angulaire (P1) pour abaisser la force d'assistance sortie du moteur au plus bas mais plutôt par le fait que lorsque la position angulaire d'au moins un pédalier (95) quitte la seconde position angulaire (P2) pour passer par un point mort de pédalage, le micro-ordinateur (61) abaisse la force d'assistance sortie du moteur monté en position centrale (91) au plus bas.

14. Système de changement de vitesses (50) pour abaisser une vitesse de rotation de moteur pendant un changement de vitesses d'une bicyclette assistée par pédale selon la revendication 13, dans lequel : la première position angulaire (P1) est une position angulaire d'une position de pédale soit à 0 degré, soit à 90 degrés ; dans lequel un point le plus haut de la position de pédale est défini comme 0 degré ; et la seconde position angulaire (P2) est la position de pédale soit à 45 degrés, soit à 135 degrés.

15. Système de changement de vitesses (50) pour abaisser une vitesse de rotation de moteur pendant un changement de vitesses d'une bicyclette assistée par pédale selon la revendication 13, dans lequel : la première valeur de force d'assistance est 50% de la valeur de force d'assistance sortie la plus haute du moteur ; la seconde valeur de force d'assistance est 30% de la valeur de force d'assistance sortie la plus haute du moteur ; lorsque la force d'assistance sortie du moteur monté en position centrale (91) est abaissée au plus bas, elle est 10% de la valeur de force d'assistance sortie la plus haute du moteur.
